# EUROPÄISCHE PATENTANMELDUNG

(11) **EP 4 046 898 A1**
(43) Veröffentlichungstag der Anmeldung: **24.08.2022**
(21) Anmeldenummer: 21197061.1
(22) Anmeldetag: 16.09.2021
(51) Int. Cl.: B62H 3/12

(54) **PARKEINRICHTUNG FÜR ZWEIRÄDER**

(30) Priorität: 22.02.2021 DE 102021000917
(71) Anmelder: Tesche, Peter, 73450 Neresheim (DE)
(72) Erfinder: Tesche, Peter, 73450 Neresheim (DE)
(74) Vertreter: Beyer, Wolfgang

(57) **Zusammenfassung**

Die Erfindung betrifft eine Vorrichtung zur sicheren und gegenüber anderen Verkehrsteilnehmern ungehinderten Unterbringung von Zweirädern. Mit der Vorrichtung sollen Parkmöglichkeiten eröffnet werden, die ein raumsparendes, gegenüber Diebstahl sichereres und in die öffentliche Umgebungsgestaltung möglichst optisch unauffällig einfügbares Parken ermöglichen. Dazu erfolgt die Unterbringung der Zweiräder in einer gegenüber der Verkehrsfläche höheren Ebene.

Ausgehend vom Stand der Technik besteht die Aufgabe der Erfindung in der Schaffung einer Parkeinrichtung für Zweiräder, die eine sicherere Unterbringung der Zweiräder gegenüber Diebstahl und Sachbeschädigungen ermöglicht, dabei die Behinderung anderer Verkehrsteilnehmer während des Parkaufenthaltes minimiert sowie vorteilhaftere Möglichkeiten für eine veränderlich anpassbare Gestaltung an die umgebende Architektur bietet.

Gelöst wird diese Aufgabe, indem die Parkvorrichtung im oberen Bereich einer im Boden gehaltenen Tragesäule angebracht ist, die Parkvorrichtung in diesem oberen Bereich von einer wettergeschützten Umkleidung umgeben wird, wobei die Parkvorrichtung so ausgebildet ist, dass die Parkebene der Zweiräder während ihres hochgezogenen Aufenthaltes außerhalb einer manuell ohne Hilfsmittel erreichbaren Ebene liegt.

## Beschreibung

Die Erfindung betrifft eine Vorrichtung zur sicheren und gegenüber anderen Verkehrsteilnehmern ungehinderten Unterbringung von Zweirädern. Mit der Vorrichtung sollen Parkmöglichkeiten eröffnet werden, die ein raumsparendes, gegenüber Diebstahl sichereres und in die öffentliche Umgebungsgestaltung möglichst optisch unauffällig einfügbares Parken ermöglichen. Dazu erfolgt die Unterbringung der Zweiräder in einer gegenüber der Verkehrsfläche höheren Ebene.

So wird nach der DE 44 20 174 A1 ein Fahrradständer mit rinnenförmigen Führungen beschrieben, die an einer Basiseinrichtung schräg nach oben geneigt und beabstandet angeordnet sind. Jede der rinnenförmigen Führungen verfügt über ein Hakenelement, das an der Basiseinrichtung höhenverstellbar angebracht ist. Aufgrund dieser Anordnung ist es mit Hilfe des Hakenelementes möglich, das entsprechende Fahrrad mit seinem vorzugsweise Vorderrad an der entsprechenden Führung hochzubewegen, bis auch das Hinterrad des entsprechenden Fahrrades in der Führung ruht. Bei den Führungen des Fahrradständers ist der untere Endabschnitt vorzugsweise jeweils bogenförmig ausgebildet. Ein zu parkendes Fahrrad kann dadurch mit seinem Hinterrad im bogenförmig gekrümmten unteren Endabschnitt der Führung ruhen. Die einzelnen Hakenelemente können mit Antriebseinrichtungen wie z.B. einen Antriebsmotor kombiniert werden. Der Fahrradständer ermöglicht auf diese Weise, dass die Fahrräder kraftsparend und einfach in den schräg nach oben geneigten Führungen des Fahrradständers eingeparkt werden können. Dadurch entsteht zu den bestehenden Lösungen ein vergleichsweise geringer Platzbedarf. Nachteilig sind jedoch die erforderlichen Grundflächen für die Aufstellung der Fahrradständer, die eine entsprechende Verkehrsbehinderung bei der Aufstellung auf öffentlichen Plätzen darstellen.

Bekannt ist weiterhin nach der DE 29 92 1763 U1 eine Parkvorrichtung für Fahrräder, mit mindestens einer Tragvorrichtung, die mindestens eine verschiebbare Parkschiene aufweist, die mit Führungselementen längs eines Trägers aus einer Parkstellung in eine Be- bzw. Entladeposition verschiebbar ist. Dabei ist dem Träger mindestens eine Führung zugeordnet, längs der die Parkschiene geführt wird. Die Parkschiene wird einerseits im Träger und andererseits in der Führung geführt. Dabei befindet sich die Führung im oberen Bereich des Trägers. Beim Herausziehen der Parkschiene erfährt diese eine bogenförmig nach unten gerichtete Bewegung und dadurch eine Vereinfachung beim Herausziehen. Der erforderliche Kraftaufwand wird geringer und kann so von Kindern und Frauen problemloser betätigt werden. Nachteilig ist jedoch auch an dieser Parkvorrichtung die erforderliche Grundfläche für die Aufstellung der Parkvorrichtung. Somit kommt es auch hier bei einer Aufstellung auf öffentlichen Plätzen zwangsläufig zu Verkehrsbehinderungen anderer Verkehrsteilnehmer.

Nach der EP 14 79 598 A2 wird eine mehrstöckige Einstellanlage für leichte Zweiräder wie Fahrräder, Motorroller oder Mopeds beschrieben, die einen Rahmen aufweist, an welchem in wenigstens zwei Etagen übereinander angeordnete Aufnahmen für die Zweiräder festgelegt sind. Die höher angeordneten Aufnahmen werden in einer Führung beweglich geführt und sind gegen die Wirkung einer Rückstellfeder absenkbar ausgebildet. Sie weisen eine von der Vorderseite aus lösbare erste Verriegelung auf, welche in ihrer Riegelstellung die abgesenkte obere Aufnahme entgegen der Federwirkung in ihrer abgesenkten Stellung hält. Diese erste Verriegelung weist einen schiebebeweglich gelagerten Riegelbolzen auf, welcher aus einer Riegelstellung gegen die Wirkung einer Riegelfeder in eine Freigabestellung verschiebbar ist. Dabei ist der Riegelbolzen schräg zur Längsachse der oberen Aufnahme ausgerichtet und erstreckt sich bei abgesenkter Aufnahme zur Führung hin. In seiner Riegelstellung wirkt er mit einem Riegelanschlag der Führung zusammen. Weiterhin ist eine zweite Verriegelung in Form einer sogenannten Riegelzange vorgesehen, die zur Festlegung eines Zweirades in einer Aufnahme dient. Diese Riegelzange weist zwei Riegel auf, welche zwischen einer ein Laufrad des Zweirades freigebenden Freigabestellung und einer das Laufrad in der Aufnahme festlegenden Riegelstellung beweglich sind, in welcher sie die Felge des Laufrades in ihre Riegelstellung hintergreifen. Mit der Einstellanlage soll eine zuverlässig sichernde Halterung des Zweirades in der Aufnahme, insbesondere während des Be- und Entladens ermöglicht werden. Nachteilig an dieser Einstellanlage ist ebenfalls der erforderliche Bedarf an Grundfläche für die Aufstellung und die damit verbundene Behinderung des öffentlichen Verkehrs.

Des Weiteren wird durch die DE 39 37 013 A1 ein witterungsgeschützter Hebe-Hänge-Hort für Fahrräder offenbart, in den von unten Fahrräder hineingezogen werden. Der als Wetterschutzgehäuse gestaltete Hebe-Hänge-Hort wird auf mehreren Stützen aufgeständert und weist eine Höhe auf, die es Personen ermöglicht, den Hort aufrecht unterqueren zu können. Die aufzubewahrenden Fahrräder können einzeln oder nebeneinander mittels einer Zugvorrichtung nach oben in die Haube hineingezogen werden. Bei diesem Hebe-Hänge-Hort ist wegen des Erfordernisses mehrerer Stützen der hierfür erforderliche Flächenaufwand ebenfalls von Nachteil. Zudem ist auch aus sicherheitstechnischen Gründen die manuelle Erreichbarkeit der hängenden Fahrräder von Nachteil. Eine Unterquerung durch Fahrzeuge ist ebenfalls lediglich nur in geringem Maße möglich und vom Abstand der Stützen zueinander abhängig.

Die Aufgabe der Erfindung besteht deshalb in der Schaffung einer Parkeinrichtung für Zweiräder, die eine sicherere Unterbringung der Zweiräder gegenüber Diebstahl und Sachbeschädigungen ermöglicht, dabei die Behinderung anderer Verkehrsteilnehmer während des Parkaufenthaltes minimiert sowie vorteilhaftere Möglichkeiten für eine veränderlich anpassbare Gestaltung an die umgebende Architektur bietet.

Gelöst wird diese Aufgabe durch die geschaffene Parkeinrichtung gemäß den beschreibenden Merkmalen nach Patentanspruch 1. Vorteilhafte Weiterbildungen der Parkeinrichtung beschreiben die Merkmale der Patentansprüche 2 bis 12.

Dazu wird die Parkvorrichtung im Unterschied zu den Vorrichtungen des Standes der Technik im oberen Bereich einer einzigen im Boden gehaltenen Tragesäule angebracht. Zum Zweck des Schutzes gegen Wettereinflüsse wird die Parkvorrichtung in diesem oberen Bereich von einer wettergeschützten Umkleidung umgeben. Dabei ist die Parkvorrichtung so ausgebildet ist, dass die Parkebene der Zweiräder während ihres Parkaufenthaltes außerhalb einer manuell ohne Hilfsmittel erreichbaren Ebene liegt. Um den materiellen Aufwand für die Parkvorrichtung zu minimieren, wird die Parkvorrichtung als eine im oberen Bereich der Tragesäule angeordnete und kreisförmig ausgebildete Haltevorrichtung ausgebildet. Für den Einsatz der Parkvorrichtung auf Randstreifen, die in Längsrichtung von Gebäuden, Plätzen o.ä. verlaufen, weist die Parkvorrichtung im oberen Bereich der Tragesäule einen horizontal angebrachten Längsträger auf, an dem entlang seiner Längsausdehnung die Zweiräder geparkt werden. Für eine effektive Beförderung der Zweiräder in die höher gelegene Parkebene wird die Parkvorrichtung mit einer Zugvorrichtung versehen, die mit einer das jeweilige zu parkende Zweirad aufnehmenden Aufnahmeschiene verbunden ist. Das auf die Aufnahmeschiene eingefahrene Zweirad wird für einen sicheren Transport und der Befestigung während des Parkaufenthaltes mittels einer Befestigungseinrichtung lösbar verbunden. Für eine sichere Aufnahme der Zweiräder in die die Auf- und Abwärtsbewegung bewirkende Transportvorrichtung wird die Befestigungseinrichtung als lösbare Klemmeinrichtung ausgebildet. Für einen effizienten Aufbau kommen mindestens zwei Klemmschienen zur Anwendung, zwischen denen das Vorderrad des jeweiligen Zweirades geschoben wird. Durch einen seitlich der Klemmschienen angeordneten Klemmmechanismus werden die Klemmschienen an das Vorderrad gedrückt und dadurch eine stabile Position während des Aufzuges, der Abwärtsbewegung sowie der Parkstellung erreicht. Die Befestigungseinrichtung wird zudem mit einer, insbesondere einer mechanischen oder elektromechanischen Verschlussvorrichtung ausgestattet, deren elektronische Freigabeeinrichtung nur vom Eigentümer des Zweirades mittels eines mobilen Endgerätes codiert und beim Ausparken wieder decodiert werden kann. Die Erzielung einer optisch unauffälligen Einordnung der Parkvorrichtung in die architektonische Umgebung kann durch eine an dieser angepassten Umkleidung erreicht werden. Die Ausführung einer derartigen Umkleidung erfolgt beispielsweise mittels eines stationär angebrachten wetterschützenden Grundkörpers. Auf diesem Grundkörper wird dann eine den gestalterischen Merkmalen der Umgebung der Parkvorrichtung angepasste Umkleidung aufgesetzt. Derartige optionale Umkleidungen können auch den jahreszeitlichen Umständen angepasst sein. So kann diese beispielsweise auf Weihnachtsmärkten die Gestaltung eines Weihnachtsbaumes, einer Kerze, einer Pyramide o.ä. aufweisen. Wirkungsvoll wird die Sicherheit gegen Diebstahl oder Sachbeschädigungen erreicht, indem die Höhe der Parkebene der Höhe der Unterkante der hochgezogenen Zweiräder entspricht und von der maximalen manuellen Reichweite der regional ansässigen Personen ohne Hilfsmittel nicht erreicht werden kann. Effektvoll gestaltet sich die Bedienung der mit einem Längsträger versehenen Parkvorrichtung, indem der Längsträger alternativ zu manuell einsetzbaren mechanischen Mitteln auch mittels einer insbesondere elektrischen Antriebseinheit quer zur Tragesäule entlang der Längsrichtung des Längsträgers bewegt werden kann und dadurch die jeweilig hochzuziehenden oder auszuparkenden Zweiräder zum Aufzugsweg an der Tragesäule geführt werden. Effizient wird der Transport der Zweiräder zur Parkebene dadurch erreicht, dass am der Befestigungseinrichtung gegenüber liegenden Ende der Aufnahmeschiene zur Führung der Zweiräder zum und auf dem Aufzugsweg dienende Rollelemente angebracht sind. Vorteilhaft wird eine benutzerfreundliche Bedienung und Steuerung der Parkvorrichtung erreicht, indem eine zur Beförderung in die Parkebene dienende Zugvorrichtung mit einer insbesondere elektrisch betriebenen Antriebseinheit verbunden ist und die Antriebseinheit über einen Funkempfänger mittels der Funksteuerung mobiler Endgeräte gesteuert wird.

Nachfolgend soll die Erfindung anhand eines Ausführungsbeispiels näher erläutert werden. Dazu zeigen die nachstehend abgebildeten zeichnerischen Darstellungen in
- **Fig. 1:**: die schematische Gesamtdarstellung der Parkvorrichtung mit einer in Höhe der Parkebene angeordneten kreisförmigen Haltevorrichtung,
- **Fig. 2:**: die schematische Gesamtdarstellung der Parkvorrichtung mit einer in Höhe der Parkebene angeordneten Haltevorrichtung mit Längsträger,
- **Fig. 3:**: die schematische Ansicht des unteren Bereiches der Tragesäule mit eingeschobenen Zweirad vor dessen Aufzug in die Parkebene,
- **Fig. 4:**: die schematische Ansicht des oberen Bereiches der Tragesäule mit einem Zweirad in Parkposition und
- **Fig. 5:**: den schematischen Aufbau der Transportvorrichtung mit der Anordnung an der Tragesäule.

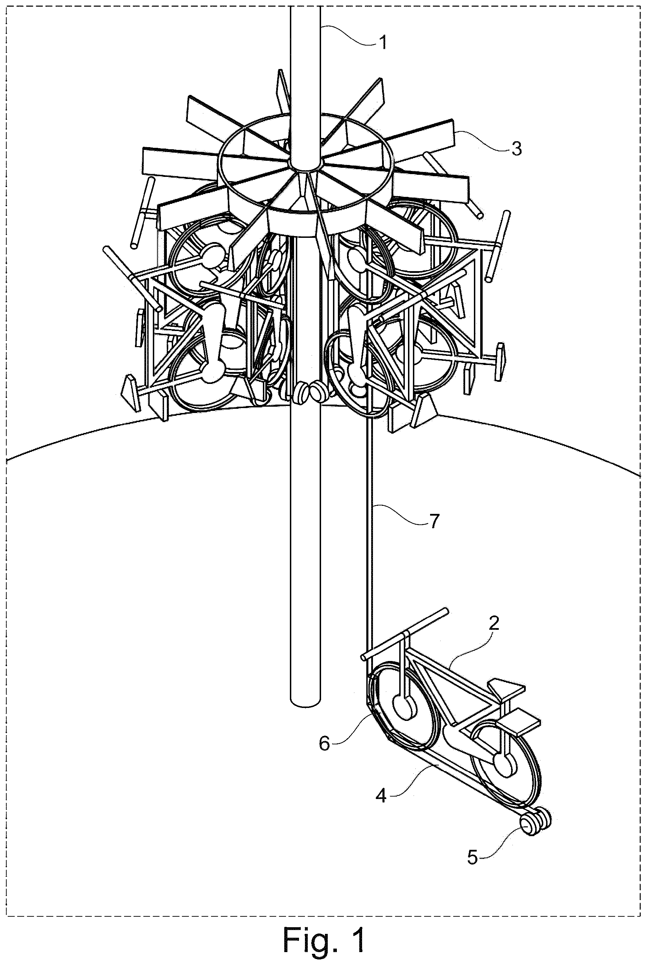

In Figur 1 wird eine Ausführung der Parkvorrichtung wiedergegeben, bei der die Haltevorrichtung 3 für zu parkende Fahrräder 2 kreisförmig um die Tragesäule 1 angebracht ist. Dabei erfolgt die Befestigung der Parkvorrichtung entweder an bereits vorhandene bzw. an in den Boden einzubringende Tragesäulen 1. Die Höhe der Parkebene ist dabei so gewählt, dass die Fahrräder 2 im hochgezogenen Zustand außerhalb eines manuell ohne Hilfsmittel nicht erreichbaren räumlichen Bereiches liegen. Mit dieser Maßnahme soll Diebstählen und Sachbeschädigungen an den Fahrrädern 2 vorgebeugt werden. Weiterhin wird ein ungehindertes Unterqueren der Parkvorrichtung durch Fußgänger und anderen Verkehrsteilnehmern ermöglicht. Als vorgegebene Höhe der Parkebene wird dafür die Höhe der Unterkante der hochgezogenen Fahrräder 1 festgelegt. Diese Höhe hängt von der maximalen manuellen, von der statistisch erfassten größten Körpergröße abhängigen Reichweite der regional ansässigen Personen ab, die ohne Nutzung von Hilfsmittel diese Höhe nicht erreichen können. Gegenüber den aus dem Stand der Technik bekannten Lösungen ist für die Parkvorrichtung lediglich eine Tragesäule 1 erforderlich. Häufig können als Tragesäulen 1 bereits vorhandene Säulen auf Plätzen, an Straßenrändern oder Gebäuden genutzt werden. Für die Nutzung der Parkvorrichtung wird nach der Herablassung der Zugvorrichtung 7 das Fahrrad 2 auf die mit der Zugvorrichtung 7 verbundene Aufnahmeschiene 4 geschoben. Die Auslösung des Herunterfahrens der Zugvorrichtung 7 erfolgt durch die funktechnische Übermittlung eines Codes mittels eines mobilen Endgerätes (z.B. Smartphone). Dieser Code wurde zuvor vom Betreiber der Parkvorrichtung käuflich erworben. Die Befestigung des Fahrrades 2 an der Aufnahmeschiene 4 erfolgt durch die Befestigungseinrichtung 6. Mittels einer mit der Befestigungseinrichtung 6 verbundenen elektronisch gesicherten Schließvorrichtung kann die Nutzung nur durch den Fahrradbesitzer vorgenommen werden. Indem das Verschließen und Öffnen der Befestigungseinrichtung 6 nur nach Eingabe des Codes erfolgen kann, wird ein Diebstahl des Fahrrades 2 ausgeschlossen. Nach erfolgtem Schließvorgang der Befestigungseinrichtung 6 wird die Zugvorrichtung 7 bis Tragesäule 1 bewegt. Als Unterstützung der Transportbewegung der Aufnahmeschiene 4 bis zur Tragesäule 1 und während des Aufzuges an der Tragesäule 1 dienen die Rollelemente 5. Nach erfolgtem Aufzug des jeweiligen Fahrrades 2 wird dieses an dem vorgesehenen Halteelement der Haltevorrichtung 3 gehalten. Die Bewegungen der Aufnahmeschiene 4 und der Zugvorrichtung 7 werden von einer elektrisch betriebenen Antriebseinheit bewirkt. Gesteuert werden die Bewegungsvorgänge durch eine Steuerbaugruppe, die Steuerimpulse von einem Funkempfänger erhält, der funktechnisch mit dem mobilen Endgerät des Fahrradbesitzers in Verbindung steht.

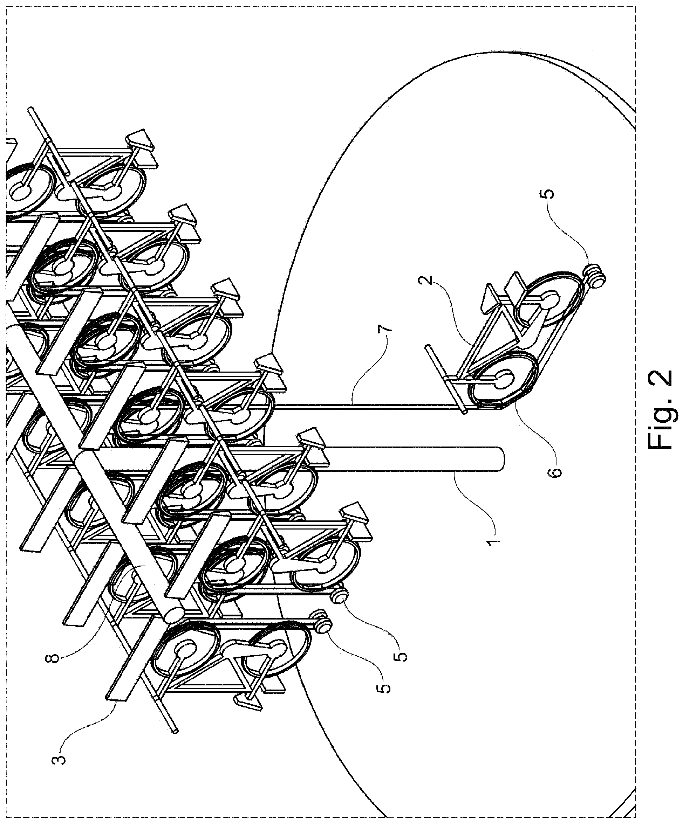

Die Darstellung der Figur 2 zeigt die schematische Ansicht einer weiteren Ausführung der Parkvorrichtung, bei der die Haltevorrichtung mit einem Längsträger 8 versehen ist. Dieser Längsträger 8 ist so ausgebildet, dass sich die einzelnen Halteelemente der Haltevorrichtung 3 entlang des Längsträgers 8 zur Tragesäule 1 hin verschieben lassen. Die Halteelemente sind dazu mittels eines an sich bekannten Transportmechanismus so miteinander verbunden, dass sich bei Bewegungsauslösung die Bewegung aller Halteelemente um den Längsträger 8 herum vollzieht. Auf diese Weise wird entweder das auszuparkende Fahrrad 2 oder das Halteelement mit der freien Parkstelle bis zur Tragesäule 1 bewegt. Durch diese Ausbildung der Parkvorrichtung besteht die Möglichkeit, eine größere Anzahl Parkplätze zur Verfügung zu stellen und dabei auch sich längs ausdehnende Randbereiche von Straßen, Platzen oder Gebäuden für die Aufstellung der Parkvorrichtung nutzen zu können.

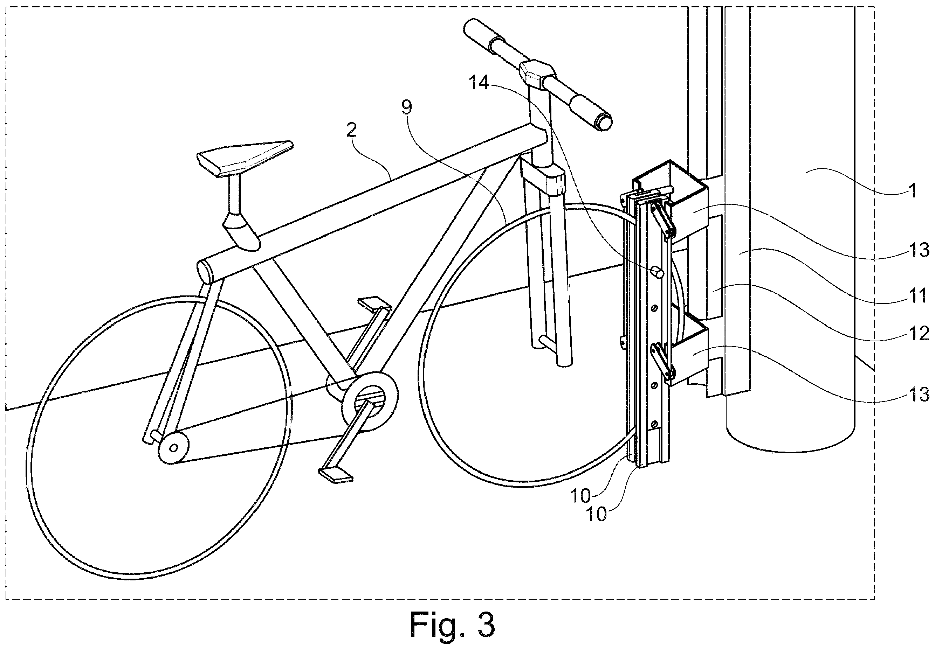

Die schematische Wiedergabe in der Figur 3 zeigt den unteren Bereich der Parkvorrichtung mit der an der Tragesäule 1 angebrachten Transportvorrichtung. Diese Transportvorrichtung besteht aus einer oberen und einer unteren Haltebaugruppe 13, die mit einer Führungsschiene 12 beweglich verbunden sind. Diese Führungsschiene 12 ist wiederum in einer Gleitschiene 11 gelagert, mittels der die Transportvorrichtung während der Aufzugs- und Abwärtsbewegung geführt wird. Das dargestellte Vorderrad 9 wurde mittig zwischen die Klemmschienen 10 geschoben und dadurch das Zweirad von der Klemmeinrichtung in eine stabile Position gebracht. Dazu werden die Klemmschienen 10 durch den zu beiden Seiten der Klemmschienen 10 angeordneten Klemmmechanismus an das Vorderrad 9 gedrückt. Ein unbeabsichtigtes Herausrutschen des Vorderrades 9 aus der Transportvorrichtung, das beispielsweise durch eine ungenügend hohe Klemmkraft möglich wäre, wird durch den Einschub eines Sicherungsbolzens 14 durch beide Klemmschienen 10 verhindert. Während der Aufwärtsbewegung der Transportvorrichtung bleibt das Vorderrad 9 in der stabilen Position. Das übrige Fahrrad bewegt sich hingegen solange um die Drehachse des Vorderrades 9 bis das Zweirad mit beiden Rädern eine vertikale Position innerhalb der Führungsschiene 12 einnimmt.

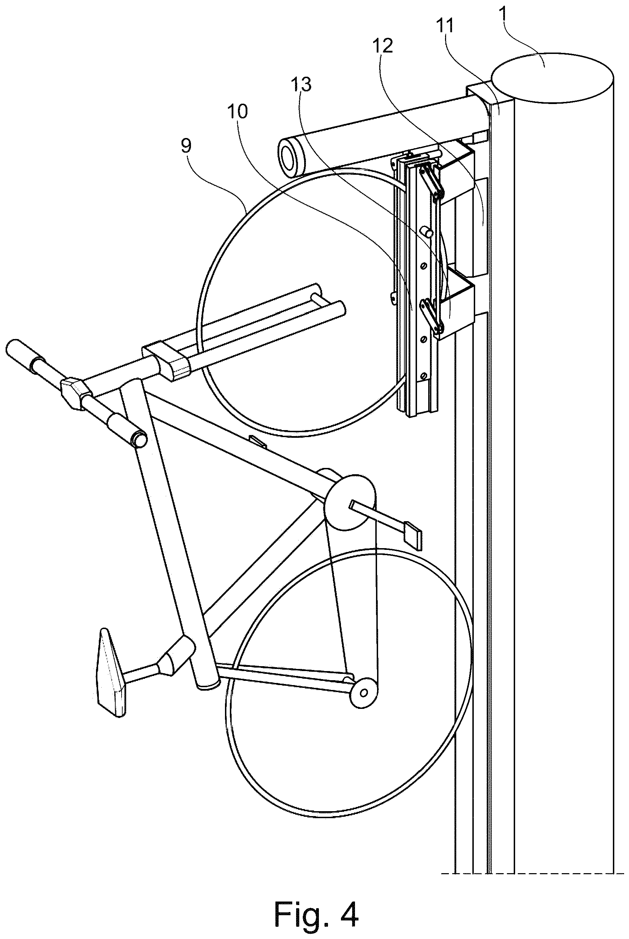

Der zeichnerischen Darstellung der Figur 4 kann die schematische Anordnung des Zweirades im hochgezogenen Zustand, d.h. in seiner Parkposition entnommen werden. Dabei befindet sich das Zweirad mit der Transportvorrichtung im oberen Bereich der Tragesäule 1. Weitere hier nicht gezeigte Transportvorrichtungen mit von diesen gehaltenen Zweirädern sind in gleichen Abständen umfänglich um die Tragesäule 1 angeordnet. Aus der hier beispielhaft gezeigten Darstellung einer Transportvorrichtung ist das zwischen den Klemmschienen 10 gehaltene Vorderrad 9 erkennbar. Gegen ein unbeabsichtigtes Herausrutschen wird das Vorderrad 9 durch einen Sicherungsbolzen gesichert. Dazu ist der Sicherungsbolzen lösbar und die Klemmschienen 10 miteinander verbindend durch in den zwei Klemmschienen 10 eingebrachte Bohrungen geschoben. Das Hinterrad des Zweirades befindet sich in dem von dem U-Profil begrenzten Innenraum der Führungsschiene 12. Der Aufzugsweg der Transportvorrichtung wird von einer am oberen Ende der Tragesäule 1 angebrachten Baugruppe begrenzt.

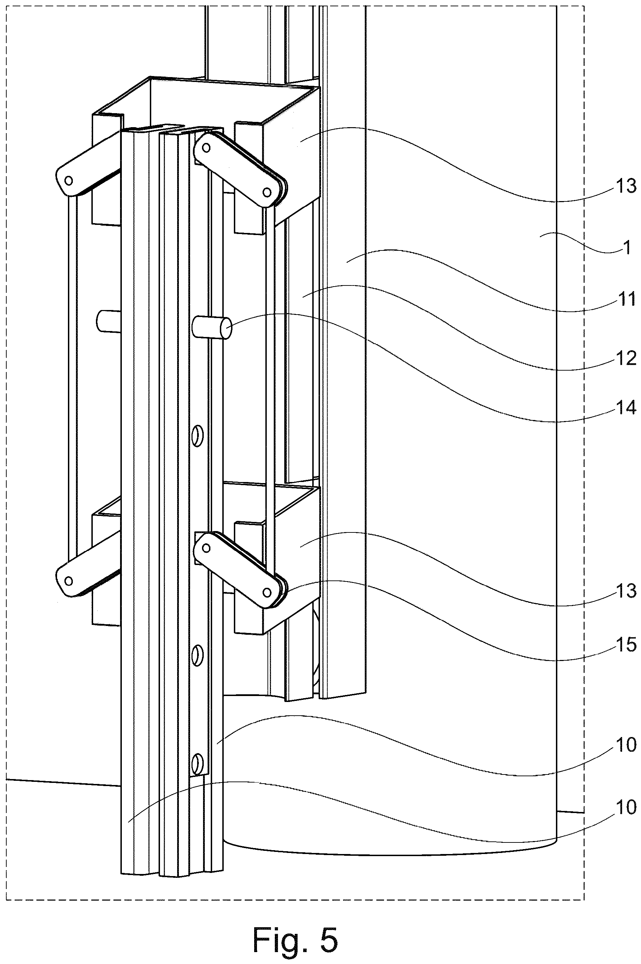

Ein möglicher Aufbau der Transportvorrichtung sowie ihre Anordnung an der Tragesäule 1 wird detailliert durch Figur 5 wiedergegeben. Dargestellt ist insbesondere der nach der Einschiebung des Zweirades zwischen die Klemmschienen 10 zur festen Position des Vorderrades 9 geschaffene Klemmmechanismus 15. Dieser Klemmmechanismus 15 besteht aus dem in der oberen und unteren Haltebaugruppe 13 drehbar gelagerten Hebelsystem, das nach dessen Betätigung die Klemmschienen 10 jeweils seitlich an das Vorderrad 9 drückt. Mittels einer an sich bekannten, hier nicht näher dargestellten Aufzugseinrichtung werden beim Aufzug und bei der Abwärtsbewegung die Haltebaugruppen 13 durch die Führungsschiene 12 geführt. Der Sicherungsbolzen 14 wird je nach Größe und Form des Vorderrades 9 durch eines der in beiden Klemmschienen 10 gegenüberliegend eingebrachten Bohrungen geschoben und gegen Verschiebung gesichert.

### Bezugszeichen

- 1: Tragesäule
- 2: Fahrrad
- 3: Haltevorrichtung
- 4: Aufnahmeschiene
- 5: Rollelemente
- 6: Befestigungseinrichtung
- 7: Zugvorrichtung
- 8: Längsträger
- 9: Vorderrad
- 10: Klemmschiene
- 11: Gleitschiene
- 12: Führungsschiene
- 13: Haltebaugruppe
- 14: Sicherungsbolzen
- 15: Klemmmechanismus

## Patentansprüche

1. Parkeinrichtung für Zweiräder, bei der die Zweiräder oberhalb der Fahrebene mittels einer Parkvorrichtung im hochgezogenen Zustand gehalten werden, **dadurch gekennzeichnet, dass** die Parkvorrichtung im oberen Bereich einer im Boden gehaltenen Tragesäule (1) angebracht ist, wobei die Parkvorrichtung so ausgebildet ist, dass die Parkebene der Zweiräder während ihres hochgezogenen Aufenthaltes außerhalb einer manuell ohne Hilfsmittel erreichbaren Ebene liegt.

2. Parkeinrichtung für Zweiräder nach Patentanspruch 1, **dadurch gekennzeichnet, dass** die Parkvorrichtung als eine im oberen Bereich der Tragesäule (1) angeordnete und kreisförmig ausgebildete Haltevorrichtung (3) ausgebildet ist.

3. Parkeinrichtung für Zweiräder nach Patentanspruch 1, **dadurch gekennzeichnet, dass** die Parkvorrichtung im oberen Bereich der Tragesäule (1) einen horizontal angebrachten Längsträger (8) aufweist, an dem entlang seiner Längsausdehnung die Zweiräder geparkt werden.

4. Parkeinrichtung für Zweiräder nach den Patentansprüchen 1 bis 3, **dadurch gekennzeichnet, dass** entlang der vertikalen Ausbildung der jeweiligen Tragesäule (1) eine das zu parkende Zweirad aufnehmende Transportvorrichtung angeordnet ist, mittels der das Zweirad aufwärts in die Parkebene und zum Ausparken abwärts zur Verkehrsebene bewegt wird.

5. Parkeinrichtung für Zweiräder nach Patentanspruch 1, **dadurch gekennzeichnet, dass** der obere Bereich der Parkvorrichtung von einer Umkleidung umgeben wird,_die aus einem stationären wetterschützenden Grundkörper und/oder aus einer lösbaren, den gestalterischen Merkmalen der Umgebung der Parkvorrichtung angepassten Umkleidung der Parkvorrichtung besteht.

6. Parkeinrichtung für Zweiräder nach Patentanspruch 1, **dadurch gekennzeichnet, dass** die Höhe der Parkebene der Höhe der Unterkante der hochgezogenen Zweiräder entspricht und von der maximalen manuellen Reichweite der regional ansässigen Personen ohne Hilfsmittel nicht erreicht werden kann.

7. Parkeinrichtung für Zweiräder nach den Patentansprüchen 1 und 3, **dadurch gekennzeichnet, dass** die Parkvorrichtung mittels einer elektrischen Antriebseinheit quer zur Tragesäule (1) entlang der Längsrichtung des Längsträgers (8) bewegt werden kann und dadurch die jeweilig hochzuziehenden oder auszuparkenden Zweiräder zum Aufzugsweg an der Tragesäule (1) geführt werden.

8. Parkeinrichtung für Zweiräder nach den Patentansprüchen 1 und 4, **dadurch gekennzeichnet, dass** die Transportvorrichtung eine als lösbare Klemmeinrichtung ausgebildete Befestigungseinrichtung (6) aufweist, die nach der Aufnahme des jeweiligen Vorderrades (9) die Zweiräder während des Parkaufenthaltes sowie der Aufzugs- und Abwärtsbewegung in einer stabilen Position hält.

9. Parkeinrichtung für Zweiräder nach den Patentansprüchen 1 und 8, ***dadurch gekennzeichnet,* dass** die Klemmeinrichtung der Transportvorrichtung aus mindestens zwei vertikal ausgebildeten Klemmschienen (10) besteht, die zur mittigen Aufnahme des jeweiligen Vorderrades (9) der Zweiräder dienen und die nach der Aufnahme mittels eines lösbaren Klemmmechanismus (15) die Zweiräder in einer stabilen Position halten.

10. Parkeinrichtung für Zweiräder nach Patentanspruch 1, **dadurch gekennzeichnet, dass** die Parkvorrichtung eine zur Beförderung in die Parkebene dienende Zugvorrichtung (7) mit einer elektrisch betriebenen Antriebseinheit aufweist und die Antriebseinheit über einen Funkempfänger mit mobilen Endgeräten in funktionaler Verbindung treten kann.

11. Parkeinrichtung für Zweiräder nach Patentanspruch 1, **dadurch gekennzeichnet, dass** die Parkvorrichtung mittels einer Antriebseinheit kreisförmig bis zur jeweiligen Einfahrtstelle des in die Parkebene zu befördernden Zweirades gedreht werden kann.

12. Parkeinrichtung für Zweiräder nach Patentanspruch 1, **dadurch gekennzeichnet, dass** die Parkeinrichtung elektrische Verbindungsbaugruppen aufweist, mit denen in den Parkpositionen der Zweiräder Verbindungen zu Ladestationen herstellbar sind, die zur Aufladung der Akkus elektrisch betriebener Zweiräder dienen.
